# EUROPEAN PATENT APPLICATION

(11) **EP 4 841 949 A1**
(43) Date of publication of application: **18.11.2026**
(21) Application number: 24925833.6
(22) Date of filing: 21.02.2024
(51) Int. Cl.: H04L 41/0897, G06F 9/50

(54) **SYSTEM, METHOD AND PROGRAM FOR MANAGING VIRTUALIZATION INFRASTRUCTURE**

(71) Applicant: Softbank Corp., Tokyo 105-7529 (JP)
(72) Inventor: MORI Kenjiro, Tokyo 105-7529 (JP)
(74) Representative: SSM Sandmair
(86) International application number: PCT/JP2024/006379
(87) International publication number: WO 2025/177500

(57) **Abstract**

Even if a failure occurs in any of plural infrastructure configuration apparatuses configuring a virtualization infrastructure and all physical resources in the failure-occurred infrastructure configuration apparatus are shut down, high-priority services continue to be provided on the virtualization infrastructure. A system comprises an information storing section that stores information on a whole of physical resources of a cluster capable of running plural workloads built on a virtualization infrastructure, and information on physical resources of each of plural infrastructure configuration apparatuses, and an information processing section that classifies plural services provided by the cluster into plural service groups that are respectively have priorities different from each other, and manages, for each of the plural service groups, an arrangement of plural workloads that are run on the cluster and the physical resources required by the service groups, based on the information on the whole of the physical resources of the cluster and information on the physical resources of each of the plurality of the infrastructure configuration apparatuses.

## Description

### TECHNICAL FIELD

The present invention relates to a management of a virtualization infrastructure capable of building a virtual machine.

### BACKGROUND ART

There is conventionally known a virtualization infrastructure for building a virtual machine, which is configured with plural racks that respectively have plural physical servers (physical resources) (see, for example, Patent Literature 1).

### CITATION LIST

### PATENT LITERATURE

Patent Literature 1: International Publication No. WO 2011/043317.

### SUMMARY OF INVENTION

### TECHNICAL PROBLEM

In any of the plural racks that are plural infrastructure configuration apparatuses configuring the foregoing virtualization infrastructure, if a failure (for example, a failure in the power supply installed for each rack) occurs, all physical servers (physical resources) in the failure-occurred rack are shut down, and the processing by virtual machines built on the virtualization infrastructure (for example, service provision) may no longer be possible. It is noted that, similar problems can arise when configuring the virtualization infrastructure using a plurality of container-type data centers (infrastructure configuration apparatuses).

### SOLUTION TO PROBLEM

A system according to an aspect of the present invention is a system for managing a virtualization infrastructure provided with a plurality of infrastructure configuration apparatuses that respectively have plural physical resources. This system comprises an information storing section that stores information on a whole of physical resources of a cluster capable of running plural workloads built on the virtualization infrastructure, and information on physical resources of each of the plural infrastructure configuration apparatuses, and an information processing section that classifies plural services provided by the cluster capable of running plural workloads built on the virtualization infrastructure, into plural service groups that respectively have priorities different from each other, and manages, for each of the plural service groups, an arrangement of plural workloads that are run on the cluster and the physical resources required by the service groups, based on the information on the whole of the physical resources of the cluster and the information on the physical resources of each of the plurality of the infrastructure configuration apparatuses.

In the foregoing system, the system may comprise a control section that performs a control so as to confirm a priority of the service group to which each of the plural workloads belongs, the plural workloads being run on a failure-occurred infrastructure configuration apparatus, when a failure occurs in any of the plural infrastructure configuration apparatuses, stop the workload of a low-priority service group running on an infrastructure configuration apparatus on which any failure does not occur, if it is confirmed that a workload of a service group with a priority equal to or higher than a predetermined priority is run on the failure-occurred infrastructure configuration apparatus, and restart the workload of the high-priority service group that was run on the failure-occurred infrastructure configuration apparatus, by using a physical resource freed up by stopping the workload on the infrastructure configuration apparatus on which any failure does not occur.

In the foregoing system, the information processing section may calculate, for each resource component, physical resources available when the failure occurs in the infrastructure configuration apparatus with the largest physical resource among the plural infrastructure configuration apparatuses, based on the information on the physical resources of each of the plural infrastructure configuration apparatuses, and determine the predetermined priority, based on a calculation result for each resource component of the available physical resources, information on the physical resources for each resource component corresponding to each of the plural priorities, and a conflict-allocation setting condition for each resource component.

In the foregoing system, the information processing section may provide a user with impact information in a case of occurring the failure in the infrastructure configuration apparatus with the largest physical resources among the plural infrastructure configuration apparatuses.

A method according to another aspect of the present invention is a method for managing a virtualization infrastructure provided with a plurality of infrastructure configuration apparatuses that respectively have plural physical resources. This method includes storing information on a whole of physical resources of a cluster capable of running plural workloads built on the virtualization infrastructure, and information on physical resources of each of the plural infrastructure configuration apparatuses, classifying plural services provided by the cluster capable of running plural workloads built on the virtualization infrastructure, into plural service groups that are respectively have priorities different from each other, and managing, for each of the plural service groups, an arrangement of plural workloads that are run on the cluster and the physical resources required for the service groups, based on the information on the whole of the physical resources of the cluster and the information on the physical resources of each of the plurality of the infrastructure configuration apparatuses.

In the foregoing method, the method may include confirming a priority of the service group to which each of the plural workloads belongs, the plural workloads being run on a failure-occurred infrastructure configuration apparatus, when a failure occurs in any of the plural infrastructure configuration apparatuses, stopping the workload of a low-priority service group running on an infrastructure configuration apparatus on which any failure does not occur, if it is confirmed that a workload of a service group with a priority equal to or higher than a predetermined priority is run on the failure-occurred infrastructure configuration apparatus, and restarting the workload of the high-priority service group that was run on the failure-occurred infrastructure configuration apparatus, by using a physical resource freed up by stopping the workload on the infrastructure configuration apparatus on which any failure does not occur.

In the foregoing method, the method may include calculating, for each resource component, physical resources available when the failure occurs in the infrastructure configuration apparatus with the largest physical resource among the plural infrastructure configuration apparatuses, based on the information on the physical resources of each of the plural infrastructure configuration apparatuses, and determining the predetermined priority, based on a calculation result for each resource component of the available physical resources, information on the physical resources for each resource component corresponding to each of the plural priorities, and a conflict-allocation setting condition for each resource component.

In the foregoing method, the method may include providing a user with impact information in the case of occurring the failure in the infrastructure configuration apparatus with the largest physical resources among the plural infrastructure configuration apparatuses.

A program according to yet another aspect of the present invention is a program executed by a computer or a processor installed in a system for managing a virtualization infrastructure provided with a plurality of infrastructure configuration apparatuses that respectively have plural physical resources. This program includes a program code for storing information on a whole of physical resources of a cluster capable of running plural workloads built on the virtualization infrastructure, and information on physical resources of each of the plural infrastructure configuration apparatuses, a program code for classifying plural services provided by the cluster capable of running plural workloads built on the virtualization infrastructure, into plural service groups that respectively have priorities different from each other, and a program code for managing, for each of the plural service groups, an arrangement of plural workloads that are run on the cluster and the physical resources required for the service groups, based on the information on the whole of the physical resources of the cluster and the information on the physical resources of each of the plurality of the infrastructure configuration apparatuses.

In the foregoing program, the program may include a program code for confirming a priority of the service group to which each of the plural workloads belongs, the plural workloads being run on a failure-occurred infrastructure configuration apparatus, when a failure occurs in any of the plural infrastructure configuration apparatuses, a program code for stopping the workload of a low-priority service group running on an infrastructure configuration apparatus on which any failure does not occur, if it is confirmed that a workload of a service group with a priority equal to or higher than a predetermined priority is run on the failure-occurred infrastructure configuration apparatus, and a program code for restarting the workload of the high-priority service group that was run on the failure-occurred infrastructure configuration apparatus, by using a physical resource freed up by stopping the workload on the infrastructure configuration apparatus on which any failure does not occur.

In the foregoing program, the program may include a program code for calculating, for each resource component, physical resources available when the failure occurs in the infrastructure configuration apparatus with the largest physical resource among the plural infrastructure configuration apparatuses, based on the information on the physical resources of each of the plural infrastructure configuration apparatuses, and a program code for determining the predetermined priority, based on a calculation result for each resource component of the available physical resources, information on the physical resources for each resource component corresponding to each of the plural priorities, and a conflict-allocation setting condition for each resource component.

In the foregoing program, the program may include a program code for providing a user with impact information in the case of occurring the failure in the infrastructure configuration apparatus with the largest physical resources among the plural infrastructure configuration apparatuses.

In the foregoing system, the foregoing method and the foregoing program, the physical resource may be a physical server, and the infrastructure configuration apparatus may be a rack having plural physical servers and a power supply.

In the foregoing system, the foregoing method and the foregoing program, the physical resource may be a rack having plural physical servers, and the infrastructure configuration apparatus may be a container-type data center having plural racks and a power supply.

The foregoing program may include a trained model by machine learning.

The foregoing virtualization infrastructure may be used, for example, in a data center, or in a RIC (RAN Intelligent Controller) used in a RAN (Radio Access Network) of a mobile communication system.

### ADVANTAGEOUS EFFECTS OF INVENTION

According to the present invention, even if a failure occurs in any of plural infrastructure configuration apparatuses configuring a virtualization infrastructure and all physical resources in the failure-occurred infrastructure configuration apparatus are shut down, high-priority services can continue to be provided on the virtualization infrastructure.

### BRIEF DESCRIPTION OF DRAWINGS

[FIG. 1] FIG. 1 is a schematic configuration diagram showing an example of an overall configuration of a virtualization infrastructure to which a system according to an embodiment can be applied.
[FIG. 2] FIG. 2 is an illustration showing an example of a failure occurrence of a single physical server in a virtualization infrastructure according to a reference example.
[FIG. 3] FIG. 3 is an illustration showing an example of a rack-scale failure occurrence in the virtualization infrastructure according to the embodiment.
[FIG. 4] FIG. 4 is an illustration showing an example of an arrangement of plural workloads with priorities in the virtualization infrastructure according to the embodiment.
[FIG. 5] FIG. 5 is an illustration showing an example of an arrangement of plural workloads with priorities in the case of occurring a rack-scale failure in the virtualization infrastructure according to the embodiment.
[FIG. 6] FIG. 6 is an illustration showing an example of a configuration of a management system that manages the virtualization infrastructure according to the embodiment.
[FIG. 7] FIG. 7 is a flowchart showing an example of generating tables related to virtual environment resources in the virtualization infrastructure according to the embodiment.
[FIG. 8] FIG. 8 is a flowchart showing an example of generating tables related to physical resources in the virtualization infrastructure according to the embodiment.
[FIG. 9] FIG. 9 is a flowchart showing an example of calculating priorities of service groups for which the workloads are restarted in the case of occurring a rack-scale failure in the virtualization infrastructure according to the embodiment.

### DESCRIPTION OF EMBODIMENTS

Hereinafter, embodiments of the present invention are described with reference to the drawings.

An example of a system according to the embodiment described in the present description define a unit of service groups and a priority of each service group for resources of workloads that are run in a virtual environment on a virtualization infrastructure, and performs a control so as to be capable of stopping a workload of low-priority service group and restart a workload of high-priority service group in the event of a resource situation where it is difficult to start all workloads (service groups) due to a failure in a unit of infrastructure configuration apparatus (rack). Furthermore, in the control, the system is a system that defines and manages resource components (CPU (Central Processing Unit), memory, GPU (Graphics Processing Unit)) of the physical resources consumed by each of the service groups and a conflict allocation setting (for example, allocating four virtual CPUs to one physical CPU actually installed in a physical server, etc.) for the physical resources.

In particular, the virtualization infrastructure managed by the system according to the present embodiment can be used in a RIC (RAN Intelligent Controller) used in a RAN (Radio Access Network) of a mobile communication system.

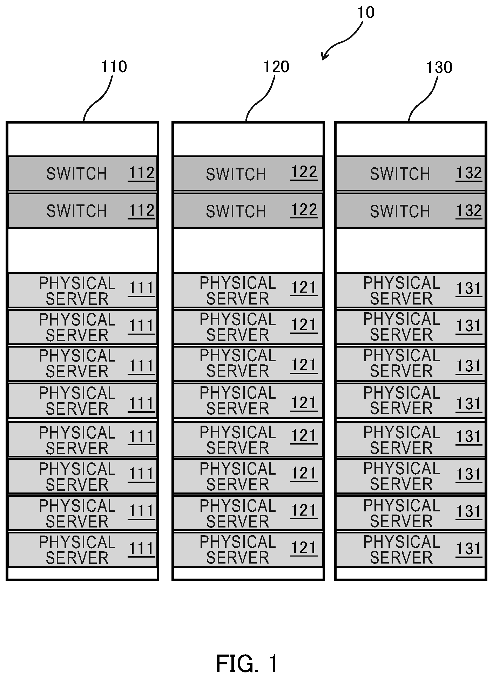

FIG. 1 is a schematic configuration diagram showing an example of an overall configuration of a virtualization infrastructure to which the system according to the embodiment can be applied. In FIG. 1, a virtualization infrastructure 10 is provided with racks 110, 120, and 130 as a plurality of infrastructure configuration apparatuses. Each of the racks 110, 120, and 130 has physical servers (also called "physical hosts") 111, 121, and 131 as plural physical resources. In the example of FIG. 1, a cluster is formed with plural physical servers 111, 121, and 131 (in the illustrated example, 24 servers) located in the racks 110, 120, and 130, which is a single unit of a group capable of running workloads such as virtual machines (VMs) or containers.

It is noted that, in the example of FIG.1, although the virtualization infrastructure 10 is configured with three racks 110, 120, and 130, the virtualization infrastructure 10 may also be configured with two racks or four or more racks. Furthermore, although each of the racks 110, 120, and 130 has eight physical servers 111, 121, and 131, each of the racks may have one to seven physical servers, or nine or more physical servers. Moreover, the number of physical servers having by each of the racks 110, 120, and 130 may be different from each other.

The plural racks 110, 120, and 130 form a cluster capable of running plural workloads on the virtualization infrastructure 10, and the workloads such as virtual machines (VMs) or containers are running on the plural physical servers 111, 121, and 131. Furthermore, each of the racks 110, 120, and 130 has other devices such as switches 112. Each of the plural racks 110, 120, and 130 may have a power supply for each rack, which provides power to the plural physical servers 111, 121, and 131.

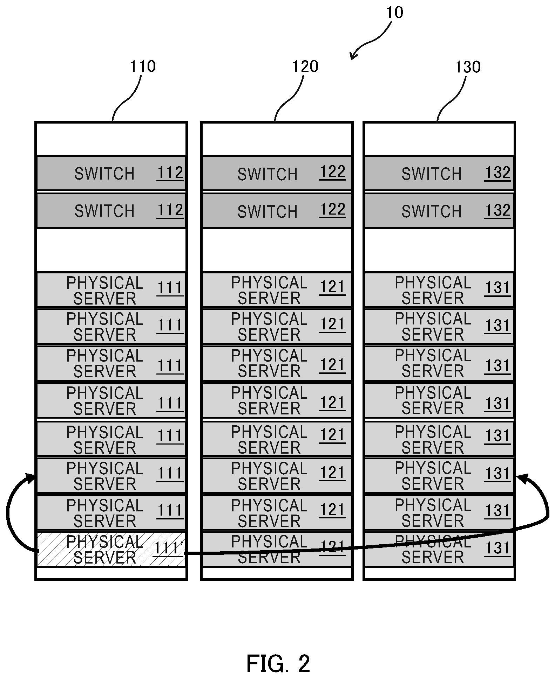

In the virtualization infrastructure 10 having the foregoing configuration, for example, as shown in FIG. 2, in the case of occurring a failure in a single physical server 111' in one rack 110 (the physical server at the bottom of rack 110 in the example of FIG. 2) , the workload running on the failure occurred physical server 111' before the failure can be restarted on another physical server in the cluster. Accordingly, the whole of cluster only needs to have a surplus resource equivalent to one physical server.

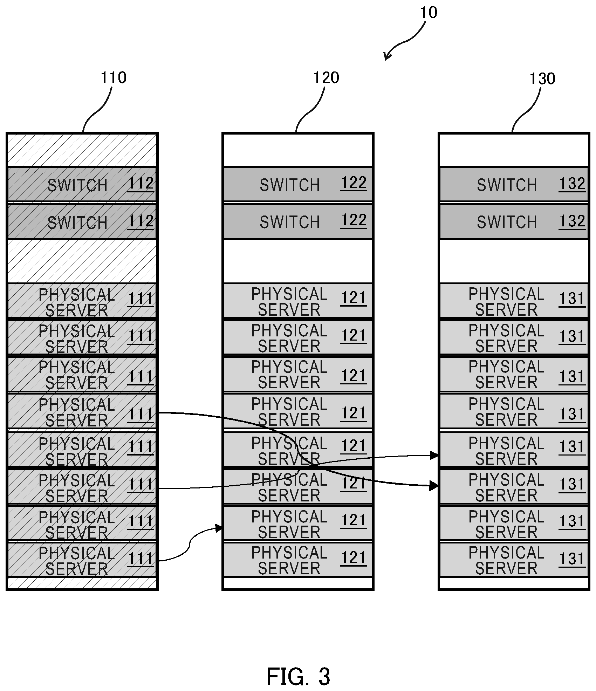

However, in the virtualization infrastructure 10 of the foregoing configuration, a failure may occur on rack-wide scale. For example, as shown in FIG. 3, if a power supply failure occurs in one rack 110, all physical servers 111 in the rack 110 go down. When the rack-wide scale failure occurs, there is no destination for the large amount of workloads running on all physical servers 111' in the rack 110, making it impossible to start the workloads and thus impacting the services to be provided. It is conceivable to run all workloads, which were running on all physical servers 111' in the rack 110, on physical servers in other racks, but this would result in a large amount of surplus resources and is not practical. For example, the cluster requires surplus resources equivalent to one rack as a whole. Therefore, a rack failure is generally not included in the failure cases.

The most likely scenario for rack failure is a shutdown of power supply due to a failure of power supply system. Since the power supply systems in typical data centers are extremely stable due to the connections of plural power lines, the installation of UPS (Uninterruptible Power Supply System) and the use of private power generation, etc., a power supply failure is often considered negligible. However, in recent years, with the emergence of container-type data centers and the like, the miniaturization of data centers has become practical, and power supply failures can no longer be ignored. In the event of the power supply failure, it is desirable to continue providing services as much as possible (by restarting the necessary workloads on the virtualization infrastructure). While it is possible to create redundancy for workloads using a load balancer or similar methods to prepare for such cases, a single configuration without redundancy has advantages, such as being able to provide the services with minimal resources and simplifying data sharing.

In the present embodiment, plural services provided by a cluster capable of running plural workloads built on the virtualization infrastructure 10 are classified into plural service groups that respectively have priorities different from each other, and the arrangement of plural workloads running in the cluster and the management of the physical servers (physical resources) 111, 121, and 131 required by the service group are performed for each of the plural service groups, based on information on the whole of the physical servers (physical resources) 111, 121, and 131 of the cluster and information on the physical servers (physical resources) 111, 121, and 131 in each of the plural racks (infrastructure configuration apparatuses) 110, 120, and 130. By the workload arrangement and the management of the physical servers (physical resources) for each of the plural service groups, it is possible to continuously provide high-priority services on the virtualization infrastructure 10 even if a failure occurs in any one of the plural racks 110, 120, or 130 configuring the virtualization infrastructure 10 and all physical servers in the failure-occurred rack are shut down.

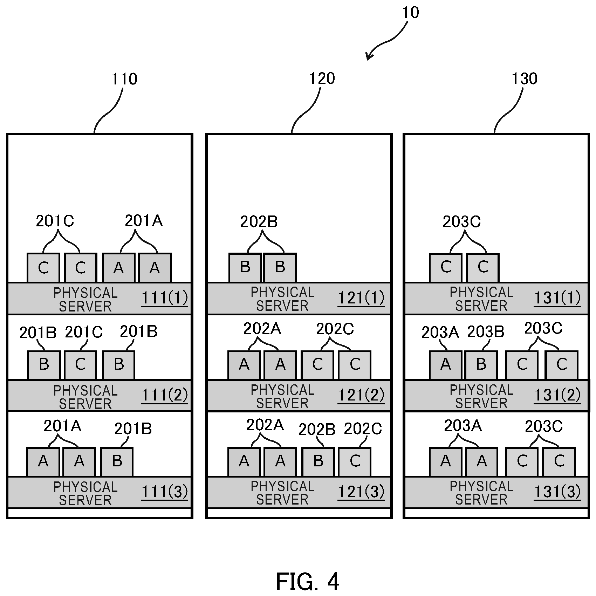

FIG. 4 is an illustration showing an example of an arrangement of plural workloads with priorities in the virtualization infrastructure 10 according to the embodiment. In FIG. 4, the workloads running on the physical servers 111(1) to 111(3), 121(1) to 121(3), and 131(1) to 131(3) in each of the plural racks 110, 120, and 130 are shown as square blocks 201A to 201C, 202A to 202C, and 203A to 203C. In each workload block, the symbols A, B, and C respectively indicate the priorities of the service groups. Priority A is the highest priority, priority B is the second highest priority, and priority C is the lowest priority. Furthermore, in the example of FIG. 4, the workloads capable being run in one physical server of the physical servers 111(1) to 111(3), 121(1) to 121(3), and 131(1) to 131(3) are four workloads.

In the virtualization infrastructure 10 of FIG. 4, it is a situation in which the upper limit for the number of workloads in the cluster is 36 and thirty workloads are currently running. This is a status that, even if any one of the physical servers fails individually, the cluster has surplus resources available to restart the workloads using another physical server, up to workloads equivalent to one physical server. However, if one rack 110 experiences a rack-wide scale failure, there is not enough capacity in the available resources in the other racks 120 and 130 to totally start the ten workloads 201A to 201C running on the physical servers 111(1) to 111(3) in the rack 110.

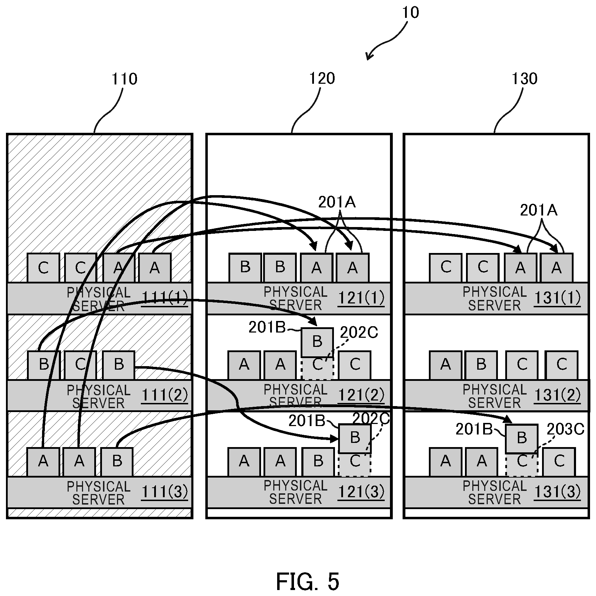

FIG. 5 is an illustration showing an example of an arrangement of plural workloads with priorities in the case of occurring a rack-wide scale failure in the virtualization infrastructure 10 according to the embodiment. In FIG. 5, when a failure occurs in the rack 110, the four workloads 201A of the service group with high priority A can be restarted using available resources on the other physical servers 121 and 131. However, for the three workloads 201B in the service group with medium priority B of the second highest priority, which were running in the rack 110, there are not enough available resources on the other physical servers 121 and 131 to restart the workloads.

Therefore, in the present embodiment, when a failure occurs in any of the plural racks (infrastructure configuration apparatuses), the priority of the service group is confirmed, to which each of the plural workloads running in the failure-occurred rack (infrastructure configuration apparatus) 110 belongs. Then, if it is confirmed that the workloads of the high-priority service group with a priority equal to or higher than a predetermined priority (for example, "medium" priority) in the failure-occurred rack (infrastructure configuration apparatus) 110 were running, the workloads of low-priority service groups (for example, "low" priority) running in the other racks (infrastructure configuration apparatuses) 120 and 130 that are not experiencing any failure, are stopped. Furthermore, in the physical resources freed up by stopping workloads in the other racks (infrastructure configuration apparatuses) 120 and 130 that are not experiencing failures, the workloads of service groups with high priority levels A and B, which were running in the failure-occurred rack (infrastructure configuration apparatus) 110, are restarted.

In the example of FIG. 5, some workloads 202C and 203C of the service group with low-priority C, which were running on the physical servers 121 and 131 in racks 120 and 130, are stopped, and the resources freed up by stopping the workloads are used to restart the three workloads 201B of the service group with priority B that were running in the rack 110.

It is noted that, in the example of FIG. 5, depending on the resource status in each rack, all workloads of the service group with priority C, which were running on the physical servers 121 and 131 in the racks 120 and 130, may be stopped, and the resources freed up by stopping the workloads may be used to restart the workloads of service group with priority B that were running in the rack 110. Furthermore, depending on the resource status in each rack, all of the workloads of the service group with priority C and some or all of the workloads of the service group with priority B, which were running on the physical servers 121 and 131 in the racks 120 and 130, may be stopped, and the resources freed up by stopping the workloads may be used to restart the workload 201A of the service group with priority A, the workload 201B of the service group with priority B, or both of those workloads, which were running in the rack 110.

As described above, in the present embodiment, the surplus resources in the virtualization infrastructure 10 can be reduced by accepting that the services of the low-priority service groups are not provided, as a countermeasure against rack failures.

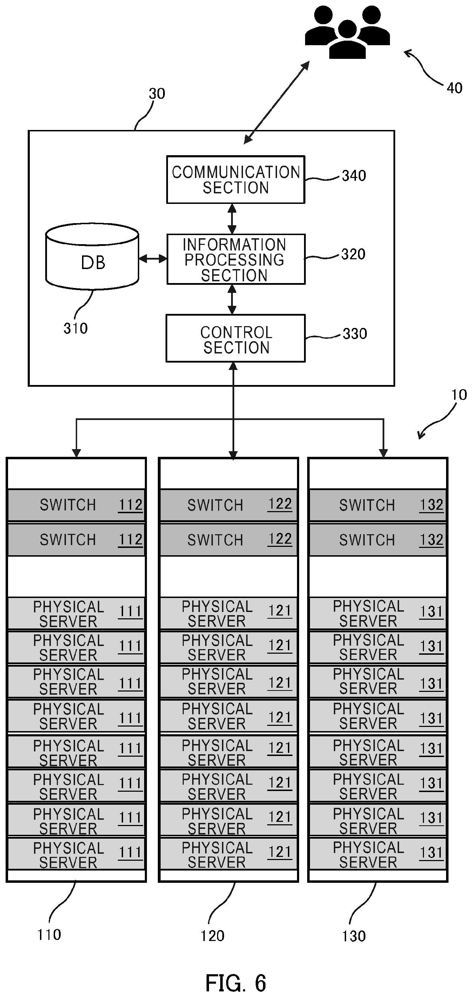

FIG. 6 is an illustration showing an example of a configuration of a management system 30 that manages the virtualization infrastructure 10 according to the embodiment. In FIG. 6, the management system 30 is provided with an information storage section (DB) 310, an information processing section 320, and a control section 330. The management system 30 may be further provided with a communication section 340. It is noted that, the management system 30 may be installed on a server or a cloud computer system which is separate from the virtualization infrastructure 10, or it may be installed as a management server on a physical server in the virtualization infrastructure 10.

The information storage section (DB) 310 stores information on a whole of the physical servers (physical resources) 111, 121, and 131 of the cluster capable of running plural workloads built on the virtualization infrastructure 10, and information on the physical servers (physical resources) 111, 121, and 131 in each of the plural racks (infrastructure configuration apparatuses) 110, 120, and 130. Furthermore, the information storage section (DB) 310 stores information on various kinds of tables such as a service group table in Table 1, a resource table by priority in Table 2, a rack resource table in Table 3, a cluster resource table in Table 4, and a condition table in Table 5 in the configuration of the virtualization infrastructure 10 of the foregoing configuration.

**[Table 1]**

| SERVICE GROUP ID | CPU | MEMORY | GPU | PRIORITY |
|---|---|---|---|---|
| 1 | 24 | 96 | 6 | HIGH |
| 2 | 16 | 60 | 0 | MEDIUM |
| 3 | 20 | 64 | 4 | MEDIUM |
| 4 | 8 | 32 | 4 | LOW |

**[Table 2]**

| PRIORITY | CPU | MEMORY | GPU |
|---|---|---|---|
| HIGH | 24 | 96 | 6 |
| MEDIUM | 36 | 124 | 4 |
| LOW | 8 | 32 | 4 |

**[Table 3]**

| RACK ID | CPU | MEMORY | GPU |
|---|---|---|---|
| 1 | 8 | 128 | 4 |
| 2 | 8 | 128 | 4 |
| 3 | 16 | 128 | 8 |

**[Table 4]**

| CPU | MEMORY | GPU |
|---|---|---|
| 32 | 384 | 16 |

**[Table 5]**

| CPU | MEMORY | GPU |
|---|---|---|
| Up to four times the number of physical CPUs | Up to the upper limit of physical memory | Up to twice the number of physical GPUs |

It is noted that, the example of the condition table in Table 5 shows a condition that allows the allocation and use of four virtual CPUs for one physical CPU installed in the physical server, a condition that allows the use up to the upper limit of physical memory installed in the physical server with respect to the memory, and a condition that allows the allocation and use of two virtual GPUs for one physical GPU installed in the physical server.

The information processing section 320 classifies plural services provided by a cluster capable of running plural workloads built on the virtualization infrastructure 10, into plural service groups that respectively have priorities different from each other. Furthermore, the information processing section 320 manages, for each of the plural service groups, the arrangement of plural workloads executed in the cluster and the physical servers (physical resources) required by the service group, based on information on the whole of the physical servers (physical resources) 111, 121, and 131 of the cluster and information on the physical servers (physical resources) 111, 121, and 131 in each of the plural racks (infrastructure configuration apparatuses) 110, 120, and 130.

As described above, when the failure occurs in any of the plural racks (infrastructure configuration apparatuses) 110, 120, or 130, the control section 330 confirms the priority of the service group to which each of the plural workloads that were running in the failure-occurred rack (infrastructure configuration apparatuses) 110 belongs. Furthermore, if the control section 330 confirms that the workload of the service group with high priority equal to or higher than a predetermined priority (for example, "medium" priority) was running in the failure-occurred rack (infrastructure configuration apparatus) 110, the control section 330 stops workloads of service groups with low priority (for example, "low" priority) running in the other racks (infrastructure configuration apparatuses) 120 and 130 that are not experiencing any failure. Moreover, the control section 330 controls to restart the workloads of service groups with high priorities A and B that were running in the failure-occurred rack (infrastructure configuration apparatus) 110, at the physical resources that are freed up by stopping the workloads in the other racks (infrastructure configuration apparatuses) 120 and 130 that are not experiencing any failure.

The communication section 340 communicates with a terminal apparatus of a user (or operator, etc.) 40 via a communication line, etc., and provides the user with impact information in the case of occurring a failure in the rack (infrastructure configuration apparatus) 110 that has the largest physical resources among the plural racks (infrastructure configuration apparatuses) 110, 120, and 130.

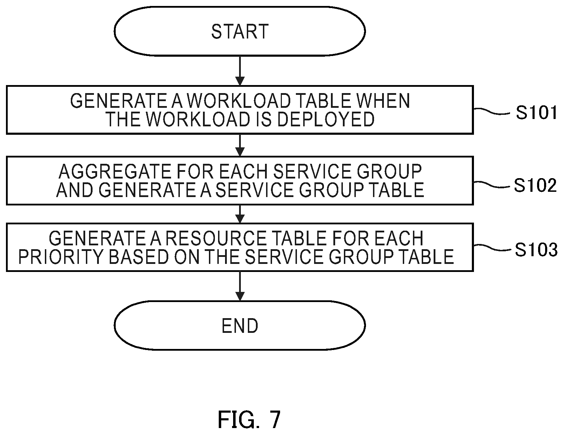

FIG. 7 is a flowchart showing an example of generating tables related to virtual environment resources in the virtualization infrastructure 10 according to the embodiment. In FIG. 7, the information processing section 320 generates a workload table related to the workload when the workload is deployed (for example, it means to build or create) on the virtualization infrastructure 10 (S101). Next, resource components (CPU, memory, GPU) are aggregated for each of the service groups that respectively have priorities different from each other, and a service group table shown in Table 1 is created (S102). Then, the information processing section 320 aggregates the resource components (CPU, memory, GPU) for each of the priorities with respect to the service group table shown in Table 1, and generates a resource table by priority shown in Table 3 (S103).

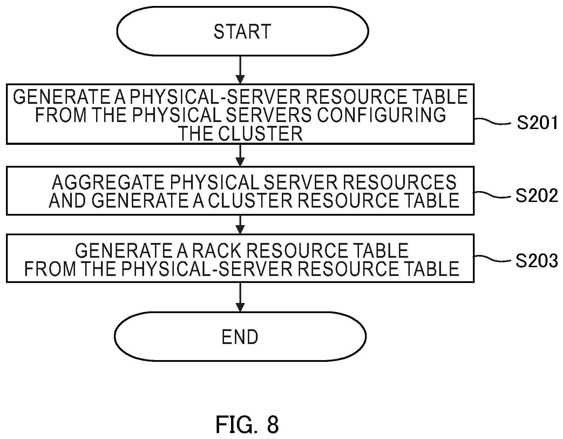

FIG. 8 is a flowchart showing an example of generating tables related to physical resources in the virtualization infrastructure according to the embodiment. In FIG. 8, the information processing section 320 generates a physical-server resource table from the information on the physical servers in each of the racks configuring the cluster in the virtualization infrastructure 10 (S201). Next, the resource components (CPU, memory, GPU) in the physical-server resource table are aggregated to create a cluster resource table shown in Table 4 (S202). Then, the information processing section 320 creates the rack resource table shown in Table 3 from the physical-server resource table (S203).

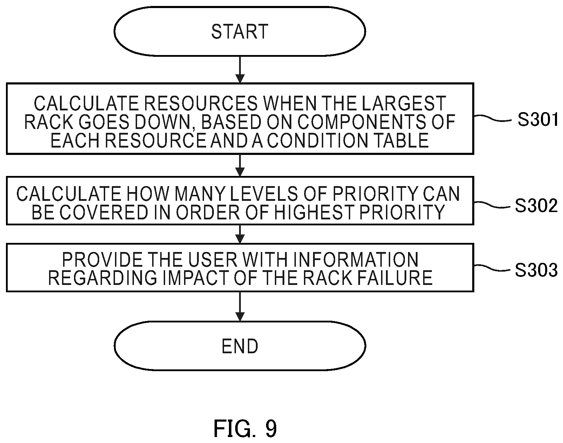

FIG. 9 is a flowchart showing an example of calculating priorities of service groups in which the workloads are restarted in the case of occurring a rack-scale failure in the virtualization infrastructure 10 according to the embodiment. In FIG. 9, the information processing section 320 calculates available physical resources for each of the resource components (CPU, memory, GPU) when the rack 110 with the largest resource components (CPU, memory, GPU) goes down (fails), i.e., when the rack 110 experiences a failure, based on the information on the physical server 111, 121, and 131 in each of the plural racks 110, 120, and 130 (S301). Next, the information processing section 320 calculates and determines how much priority can be covered, in order of highest priority, i.e., the foregoing predetermined priority, based on a calculation result for each of the resource components (CPU, memory, GPU) of the physical resources of the available racks 120 and 130 (rack resource table in Table 7), the information for each of the resource components (CPU, memory, GPU) of the physical resources corresponding to each of the plural priority levels (high, medium, low) (resource table by priority in Table 6), and the conflict-allocation setting condition for each of the resource components (CPU, memory, GPU) in Table 5 (S302).

**[Table 6]**

| PRIORITY | CPU | MEMORY | GPU |
|---|---|---|---|
| HIGH | 24 | 96 | 6 |
| MEDIUM | 36 | 124 | 4 |
| LOW | 8 | 32 | 4 |
| TOTAL | 68 | 252 | 14 |

**[Table 7]**

| RACK ID | CPU | MEMORY | GPU |
|---|---|---|---|
| 1 | 8 | 128 | 4 |
| 2 | 8 | 128 | 4 |
| 3 | 16 | 128 | 8 |
| TOTAL | 32 | 384 | 16 |
| TAKING THE CONDITIONS INTO ACCOUNT | 128 | 384 | 32 |

Referring to Table 7, when the rack 110 (rack ID = 1) goes down (fails), it can be seen that the number of CPUs becomes 16 (64 cores), the memory becomes 256 GB and the number of GPUs become 8 (16 cores) which are usable in the whole of the virtualization infrastructure 10. Furthermore, in Table 7, referring to the row of "taking the conditions into account" that is calculated by considering the conflict-allocation setting conditions for each of the resource components (CPU, memory, GPU) in Table 5,

Next, the information processing section 320 transmits and provides impact information regarding the impact when the rack 110 with the largest resource components (CPU, memory, GPU) goes down (fails), i.e., when the failure occurs in the rack 110, to the terminal apparatus of the user (or operator, etc.) 40 via the communication section 340 (S303).

In the virtualization infrastructure 10 of the present embodiment, under the normal circumstances, if all of the racks 110, 120, and 130 are operating normally, it is possible to run the workloads of the service groups with all of the priority levels (high, medium, low).

Furthermore, in the present embodiment, in a pre-calculation to prepare for the case of rack failure in which any of the racks goes down (fails), since the rack 110 has the largest resource components (CPU, memory, GPU) among the three racks 110, 120, and 130, it can be determined that the impact is significant when a rack failure occurs in which the rack 110 goes down (fails). If the rack 110 goes down (fails), the number of CPU cores in the service groups with high and medium priority levels becomes to 60 cores, and the workloads of the service groups with low priority level cannot be covered.

Furthermore, in the foregoing pre-calculations, since it is known that the workloads of the service group with low priority level cannot be covered, when the rack failure occurs in which the rack 110 goes down (fails), the workloads of the service group with low priority level on the physical servers 121 and 131 in the other racks 120 and 130 are stopped, and in the resources of the physical servers 121 and 131 freed up in the racks 120 and 130, the workloads of the service groups with high and medium priority levels, which are running on the rack 110 before the failure occurred, are restarted.

It is noted that, in the present embodiment, all or part of the generation of the resource-related table of the virtual environment in FIG.7, the generation of the physical resource-related table in FIG. 8, and the calculation of the service group priority in FIG. 9 may be calculated in advance before starting the actual operation of the virtualization infrastructure 10, or it may be recalculated when the number or configuration of the racks of the virtualization infrastructure 10 is changed, when the workload of a virtual machine (VM), a container, or the like running on the virtualization infrastructure 10 is changed, or when the services provided by the virtualization infrastructure 10 are changed, etc.

As described above, according to the present embodiment, even if the failure occurs in any of the plural racks 110, 120, or 130 configuring the virtualization infrastructure 10, and all physical servers 111 in the failure-occurred rack stop are shut down, high-priority services can continue to be provided on the virtualization infrastructure 10.

Furthermore, according to the present embodiment, it is possible to suppress the surplus resource of the physical server in the racks in the virtualization infrastructure 10.

It is noted that, in the present embodiment, the description mainly focused on the case where the plural infrastructure configuration apparatuses configuring the virtualization infrastructure 10 are the racks 110, 120, and 130 that respectively have plural physical servers and power supplies, and the physical resources are the physical servers 111, 121, and 131. However, the types of the plural infrastructure configuration apparatuses and the physical resources configuring the virtualization infrastructure 10 are not limited to these types. For example, each of the plural infrastructure configuration apparatuses configuring the virtualization infrastructure 10 may be a container-type data center having plural physical servers and power supplies, and the physical resource may be a rack having plural physical servers. In this case, even if a failure occurs in any one of the plural container-type data centers configuring the virtualization infrastructure 10, and all physical servers in the failure-occurred container-type data center stop working, the high-priority service can continue to be provided on the virtualization infrastructure 10.

Furthermore, according to the present embodiment, it is possible to suppress a surplus resource in the container-type data center in the virtualization infrastructure 10.

Since the present invention can suppress the surplus resource in the virtualization infrastructure 10, and continue to provide the high-priority service on the virtualization infrastructure 10 even if a failure occurs in any of the plural racks 110, 120, or 130 configuring the virtualization infrastructure 10, it is possible to contribute to achieving Goal 9 of the Sustainable Development Goals (SDGs), which is to "Create a foundation for industry and technological innovation".

It is noted that, the process steps and configuration elements of the management system (storage section, information processing section, control section, communication section), etc. described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, physical servers, racks, container-type data centers, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like for using to establish the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may be executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: virtualization infrastructure
30: management system
110: rack
111: physical server
111(1) to 111(3): physical server
111': physical server
112: switch
120: rack
121: physical server
112(1) to 121(3): physical server
130: rack
131: physical server
131(1) to 131(3): physical server
201A to 201C: workload
202A to 202C: workload
203A to 203C: workload
320: information processing section
330: control section
340: communication section

## Claims

1. A system for managing a virtualization infrastructure provided with a plurality of infrastructure configuration apparatuses that respectively have plural physical resources, the system comprising:
an information storing section that stores information on a whole of physical resources of a cluster capable of running plural workloads built on the virtualization infrastructure, and information on physical resources of each of the plural infrastructure configuration apparatuses; and
an information processing section that classifies plural services provided by the cluster capable of running plural workloads built on the virtualization infrastructure, into plural service groups that respectively have priorities different from each other, and manages, for each of the plural service groups, an arrangement of plural workloads that are run on the cluster and the physical resources required by the service groups, based on the information on the whole of the physical resources of the cluster and the information on the physical resources of each of the plurality of the infrastructure configuration apparatuses.

2. The system according to claim 1, comprising a control section that performs a control so as to:
confirm a priority of the service group to which each of the plural workloads belongs, the plural workloads being run on a failure-occurred infrastructure configuration apparatus, when a failure occurs in any of the plural infrastructure configuration apparatuses;
stop the workload of a low-priority service group running on an infrastructure configuration apparatus on which any failure does not occur, if it is confirmed that a workload of a service group with a priority equal to or higher than a predetermined priority is run on the failure-occurred infrastructure configuration apparatus; and
restart the workload of the high-priority service group that was run on the failure-occurred infrastructure configuration apparatus, by using a physical resource freed up by stopping the workload on the infrastructure configuration apparatus on which any failure does not occur.

3. The system according to claim 2,
wherein the information processing section:
calculates, for each resource component, physical resources available when the failure occurs in the infrastructure configuration apparatus with a largest physical resource among the plural infrastructure configuration apparatuses, based on the information on the physical resources of each of the plural infrastructure configuration apparatuses; and
determines the predetermined priority, based on a calculation result for each resource component of the available physical resources, information on the physical resources for each resource component corresponding to each of the plural priorities, and a conflict-allocation setting condition for each resource component.

4. The system according to claim 3,
wherein the information processing section provides a user with impact information in a case of occurring the failure in the infrastructure configuration apparatus with the largest physical resources among the plural infrastructure configuration apparatuses.

5. The system according to any one of claims 1 to 4,
wherein the physical resource is a physical server, and
wherein the infrastructure configuration apparatus is a rack having plural physical servers and a power supply.

6. The system according to any one of claims 1 to 4,
wherein the physical resource is a rack having plural physical servers, and
wherein the infrastructure configuration apparatus is a container-type data center having plural racks and a power supply.

7. A method for managing a virtualization infrastructure provided with a plurality of infrastructure configuration apparatuses that respectively have plural physical resources, the method comprising:
storing information on a whole of physical resources of a cluster capable of running plural workloads built on the virtualization infrastructure, and information on physical resources of each of the plural infrastructure configuration apparatuses;
classifying plural services provided by the cluster capable of running plural workloads built on the virtualization infrastructure, into plural service groups that respectively have priorities different from each other; and
managing, for each of the plural service groups, an arrangement of plural workloads that are run on the cluster and the physical resources required for the service groups, based on the information on the whole of the physical resources of the cluster and the information on the physical resources of each of the plurality of the infrastructure configuration apparatuses.

8. The method according to claim 7, comprising:
confirming a priority of the service group to which each of the plural workloads belongs, the plural workloads being run on a failure-occurred infrastructure configuration apparatus, when a failure occurs in any of the plural infrastructure configuration apparatuses;
stopping the workload of a low-priority service group running on an infrastructure configuration apparatus on which any failure does not occur, if it is confirmed that a workload of a service group with a priority equal to or higher than a predetermined priority is run on the failure-occurred infrastructure configuration apparatus; and
restarting the workload of the high-priority service group that was run on the failure-occurred infrastructure configuration apparatus, by using a physical resource freed up by stopping the workload on the infrastructure configuration apparatus on which any failure does not occur.

9. A program executed by a computer or a processor installed in a system for managing a virtualization infrastructure provided with a plurality of infrastructure configuration apparatuses that respectively have plural physical resources, the program comprising:
a program code for storing information on a whole of physical resources of a cluster capable of running plural workloads built on the virtualization infrastructure, and information on physical resources of each of the plural infrastructure configuration apparatuses;
a program code for classifying plural services provided by the cluster capable of running plural workloads built on the virtualization infrastructure, into plural service groups that respectively have priorities different from each other; and
a program code for managing, for each of the plural service groups, an arrangement of plural workloads that are run on the cluster and the physical resources required for the service groups, based on the information on the whole of the physical resources of the cluster and the information on the physical resources of each of the plurality of the infrastructure configuration apparatuses.

10. The program according to claim 9, comprising:
a program code for confirming a priority of the service group to which each of the plural workloads belongs, the plural workloads being run on a failure-occurred infrastructure configuration apparatus, when a failure occurs in any of the plural infrastructure configuration apparatuses;
a program code for stopping the workload of a low-priority service group running on an infrastructure configuration apparatus on which any failure does not occur, if it is confirmed that a workload of a service group with a priority equal to or higher than a predetermined priority is run on the failure-occurred infrastructure configuration apparatus; and
a program code for restarting the workload of the high-priority service group that was run on the failure-occurred infrastructure configuration apparatus, by using a physical resource freed up by stopping the workload on the infrastructure configuration apparatus on which any failure does not occur.
